## Europäisches Patentamt

## European Patent Office

## Office européen des brevets

(19)

(11) Veröffentlichungsnummer: **0 017 879**
**B1**

(12) # EUROPÄISCHE PATENTSCHRIFT

(45) Veröffentlichungstag der Patentschrift:
02.06.82

(51) Int. Cl.³: **A 01 N 47/30**

(21) Anmeldenummer: **80101832.6**

(22) Anmeldetag: **05.04.80**

(54) Flüssige Formulierungen enthaltend 3-(3,4-Dichlorphenyl)-1-methyl-1-methoxy-harnstoff und ihre Verwendung zur Unkrautbekämpfung.

(30) Priorität: **12.04.79 DE 2914867**

(43) Veröffentlichungstag der Anmeldung:
**29.10.80 Patentblatt 80/22**

(45) Bekanntmachung des Hinweises auf die Patenterteilung:
**02.06.82 Patentblatt 82/22**

(84) Benannte Vertragsstaaten:
**AT CH DE FR GB IT LI NL SE**

(56) Entgegenhaltungen:
**GB-A-952 344**
**US-A-3 060 084**
**CENTRAL PATENTS INDEX, Basic Abstract
Journal, C-AGDOC, Woche R 16, 5. Juni 1970,
Zusammenfassung Nr. 27510R
Derwent Publications Ltd. London, G. B.**

(73) Patentinhaber: **HOECHST AKTIENGESELLSCHAFT,
Postfach 80 03 20, D-6230 Frankfurt/Main 80 (DE)**

(72) Erfinder: **Albrecht, Konrad, Dr., Sodener Strasse 64,
D-6233 Kelkheim (Taunus) (DE)**
Erfinder: **Frensch, Heinz, Dr., Oestricher Weg 33,
D-6000 Frankfurt am Main 71 (DE)**
Erfinder: **Schumacher, Hans, Dr., Claudiusstrasse 4,
D-6093 Flörsheim am Main (DE)**

## Flüssige Formulierungen enthaltend 3-(3,4-Dichlorphenyl)-1-methyl-1-methoxy-harnstoff und ihre Verwendung zur Unkrautbekämpfung

Die vorliegende Erfindung betrifft flüssige, herbizide Mittel in Form von emulgierbaren Konzentraten oder von wäßrigen Suspensionskonzentraten, die 3-(3,4-Dichlorphenyl)-1-methyl-1-methoxy-harnstoff (common name: Linuron) als Wirkstoff, übliche Formulierungshilfsmittel sowie zusätzlich fettlösliche Disazofarbstoffe als kristallisationshemmende Bestandteile enthalten, welche das Auskristallisieren von Wirkstoff in den wäßrigen Emulsionen der Konzentrate bzw. in den wäßrigen Suspensionskonzentraten und deren wäßrigen Verdünnungen verhindern.

Es ist bekannt (vgl. DBP 1 028 986), Linuron als Herbizid zu verwenden. Der Wirkstoff wird meist in Form von Suspensionen in Wasser appliziert, die man erhalten kann, indem man ein Spritzpulver von Linuron in Wasser verrührt. Spritzpulver müssen aber vor dem Einsetzen zur Herstellung der wäßrigen Suspensionsspritzbrühen von dem Anwender genau ausgewogen werden. Auf dem freien Felde ist das in der Praxis ein aufwendiger und oft ungenauer Vorgang, vor allem bei Wind. Das Pulver stäubt und kann weggeweht werden. Auch die Anwender sind diesem Staub unmittelbar ausgesetzt. Die Herstellung von Linuron-Spritzpulvern ist ebenfalls aufwendig. Denn infolge des niederen Schmelzpunktes des Wirkstoffs von 93—94°C und seiner weichen, nicht spröden Beschaffenheit müssen zur Formulierung der Spritzpulver teure feine, adsorptionsfähige Trägerstoffe, wie synthetische Kieselsäuren, verwendet werden, um ein Ansintern des Mahlproduktes bei der Mahlung in schnellaufenden Hochleistungsmühlen, wie Gebläse- oder Stiftmühlen sowie in Luftstrahlmühlen durch die bei dem Mahlvorgang entstehende Wärme zu vermeiden. Die Suspendierbarkeiten von Linuron-Spritzpulvern in Wasser erfüllen trotz dieses erforderlichen Aufwandes nur gerade eben internationale Standardnormen der WHO- und CIPAC-Bestimmungen, obgleich die Spritzpulverteilchen hohe Feinheiten bei mittleren Teilchengrößen zwischen 5—20 Mikron besitzen, wobei nicht mehr als 2 Gew.-% gröber als 44 Mikron sind.

Es besteht daher seit langem ein dringender Bedarf, Linuron in Form eines flüssigen, gießfähigen Konzentrates, z. B. eines wäßrigen Suspensionskonzentrates in feinverteilter Dispersionsform, oder über ein emulgierbares Konzentrat in emulgierter Form zu applizieren. Die flüssigen Dispersionskonzentrate bzw. die emulgierbaren Konzentrate sind handlicher und erheblich leichter abzumessen als Spritzpulverformulierungen. Auch ihre Herstellung ist einfacher.

Emulgierbare Konzentrate sind Lösungen von Wirkstoffen in geeigneten Lösungsmitteln unter Zusatz entsprechender Emulgatoren, die gewährleisten, daß das emulgierbare Konzentrat bei dem Verdünnen mit Wasser stabile Emulsionen bildet. Die Herstellung von emulgierbaren Konzentraten erfolgt z. B. in Rührkesseln.

Linuron besitzt eine gute Löslichkeit in aromatischen Lösungsmitteln, wie sie für die Herstellung von emulgierbaren Konzentraten allgemein verwendet werden. Auch findet man übliche Emulgatormischungen, die mit derartigen Linuron-Lösungen emulgierbare Konzentrate bilden.

Verrührt man solche emulgierbaren Konzentrate von Linuron, wie sie z. B. in der GB-PS 982 344 beschrieben sind, in Wasser, so bilden sich aus den zunächst entstehenden Emulsionen alsbald sogenannte Suspo-Emulsionen, das sind wäßrige Dispersionen, in denen feste Wirkstoffteilchen und feine Tröpfchen von Wirkstofflösungen in wasserunlöslichen Lösungsmitteln nebeneinander vorhanden sind, woraus sich rasch Linuronkristalle bilden, die in Form von Kristallnadeln von 100 bis 250 Mikron Länge ausfallen und auch sedimentieren. Derartige Emulsionsspritzbrühen bzw. Suspo-Emulsionen besitzen vor allem aber eine geringere Wirksamkeit als solche von vergleichbar konzentrierten wäßrigen Spritzpulversuspensionen, da in Linuron-Emulsionen der Wirkstoff infolge des Kristallisierens letztlich in einer viel gröberen und inhomogeneren Verteilung vorliegt und ausgebracht wird als in Spritzpulversuspensionen.

Auch die in der japanischen Patentschrift Sho 45 10 359 (Anmeldungs-Nr. Sho 42-13 123) beschriebenen emulgierbaren Linuron-Konzentrate bilden bei dem Verrühren in Wasser spontan Linuronkristalle mit aus, die innerhalb weniger Minuten bis auf 250 Mikron wachsen und eine sichere biologische Wirkung nicht mehr gewährleisten sowie Verstopfungen der Düsen und Schutzfilter von Spritzgeräten hervorrufen können. Dieses Auskristallisieren wird beschleunigt, wenn die Spritzemulsion gerührt wird.

Suspensionskonzentrate sind konzentrierte wäßrige Suspensionen von fein vermahlenen und in Wasser wenig löslichen festen Wirkstoffen, deren Schmelzpunkt oberhalb 50°C liegen sollte. Zu ihrer Herstellung pumpt man die noch grobe Wirkstoffsuspension, die die erforderlichen Formulierungshilfsstoffe enthält, durch ein in einem Stahlzylinder mittels einer Rührwelle in Rotation gebrachtes Fließbett von kleinen Glas-, Quarz- oder Korundperlen in einer sogenannten Reibkugel- oder Sandmühle. Da Staub hierbei nicht auftreten kann, sind teure Staub-Filteranlagen nicht erforderlich. Die Mahlung erfolgt unter Kühlung mit Wasser.

Auch wäßrige Suspensionskonzentrate von Linuron wurden bereits beschrieben, jedoch konnten sich diese in der Praxis gleichfalls nicht durchsetzen, obwohl hiervon besonders wegen der Handlichkeit fließfähiger Suspensionskonzentrate und wegen ihrer Nichtbrennbarkeit ein großer Bedarf besteht. In der US-PS 3 060 084 werden Formulierungen von Suspensionskonzentraten beschrieben, die polycarboxylierte Kohlenwasserstoffpolymere enthalten, z. B. Salze von Polyacrylsäuren. Obwohl ein Beispiel mit Linuron darin nicht aufgeführt ist, wird in der Beschreibung erwähnt, daß Linuron ähnlich zu formulieren sei. Formuliert man aber Linuron mit den dort aufgeführten Suspendierhilfsmitteln oder auch mit andersartigen bekannten Dispergier- und Netzmitteln zu den gewünschten Suspensionskonzentraten, so muß man feststellen, daß die Produkte mit zunehmender Lagerungszeit bei Lagerungstemperaturen bis zu 50°C an Instabilität zunehmen. Die Dispersionen verdicken, werden fest oder scheiden nicht redispergierbare Sedimente des Wirkstoffes ab (vgl. Vergleichsbeispiele 1 und 2).

Vergleicht man die Kornverteilung der frisch hergestellten Dispersionen mit z. B. zwei und drei Monate bei 50°C gelagerten Proben, so kann man feststellen, daß in einem anfangs gut fließfähigen Suspensionskonzentrat von Linuron auf Grund der noch vorhandenen, wenn auch geringen Wasserlöslichkeit des Wirkstoffes von 80 ppm bei 20°C während der Lagerung ein Umkristallisieren zu groben Linuron-Kristallen auf Kosten der feineren stattgefunden hat. Das Kristallwachstum läßt sich z. B. in mikroskopischen Aufnahmen anschaulich festhalten. Dieses Kristallwachstum von Linuron ist die Hauptursache für die Instabilität von wäßrigen Linuron-Dispersionen, da hierdurch die Gesamtoberfläche der Linuronpartikel sowie die Partikelzahl und die Partikelgröße fortlaufend verändert werden, während Menge und Art der Dispergier- und Netzmittel aber auf das sorgfältigste im Hinblick auf die Erfordernisse der ursprünglich vorhandenen Teilchenzahl und Teilchenoberfläche ausgewählt werden mußten, um bei höher konzentrierten Wirkstoffsuspensionen überhaupt ein gießbares Produkt zu erhalten.

Wäßrige Dispersionen, die Linuron in Mengen von 20 bis 50 Gew.-% und in Feinheiten von ca. 5 Mikron enthalten, zeigen daher nach einer Lagerung von 2 Monaten bei 50°C regelmäßig geformte Kristalle mit Durchmessern bis zu 70 Mikron und darüber. In allen solchen Fällen setzt sich der Wirkstoff dann aus der Suspension in Form zäher, bisweilen fester Sedimente ab oder die Präparationen verfestigen sich zu schneidfähigen Pasten.

Es wurde nun überraschenderweise gefunden, daß man alle in Zusammenhang mit dem Auskristallisieren von Linuron aus wäßrigen Konzentraten bzw. aus wäßrigen Verdünnungen flüssiger Konzentrate genannten Nachteile überwinden und das Kristallwachstum von Linuron in solchen wäßrigen Systemen blockieren kann, wenn man den flüssigen, herbiziden und Linuron als Wirkstoff enthaltenden emulgierbaren Konzentraten oder den wäßrigen Suspensionskonzentraten fettlösliche Disazofarbstoffe zusetzt.

Gegenstand der vorliegenden Erfindung sind daher flüssige, herbizide und Linuron als Wirkstoff enthaltende Mittel in Form von emulgierbaren Konzentraten oder in Form von wäßrigen Suspensionskonzentraten, dadurch gekennzeichnet, daß sie als kristallisationshemmende Bestandteile fettlösliche Disazofarbstoffe enthalten, die das Auskristallisieren von Wirkstoff in den wäßrigen Emulsionen der emulgierbaren Konzentrate bzw. in den wäßrigen Suspensionskonzentraten und deren wäßrigen Verdünnungen verhindern.

Erfindungsgemäß beträgt der Gehalt an fettlöslichen Disazofarbstoffen in den genannten herbiziden Mitteln vorzugsweise 0,05 bis 2 Gew.-%, insbesondere 0,1 bis 0,5 Gew.-%.

Gegenstand der Erfindung sind insbesondere flüssige, emulgierbare, herbizide Konzentrate, enthaltend Linuron als Wirkstoff, organische Lösungsmittel und Emulgatoren, dadurch gekennzeichnet, daß sie

| | |
|---|---|
| 10 bis 25 Gew.-% | Linuron |
| 25 bis 40 Gew.-% | Ketone, insbesondere Isophoron und/oder Cyclohexanon, |
| 60 bis 18 Gew.-% | aromatische Lösungsmittel, die gegebenenfalls bis zu 35 Gew.-% gesättigte Kohlenwasserstoffe enthalten, |
| 0,05 bis 2 Gew.-% | fettlösliche Disazofarbstoffe und |
| 4,95 bis 15 Gew.-% | Emulgatoren |

enthalten.

Gegenstand der Erfindung sind weiterhin insbesondere flüssige, wäßrige, herbizide Suspensionskonzentrate, enthaltend Linuron als Wirkstoff, oberflächenaktive Stoffe sowie gegebenenfalls Suspensionshilfsmittel, Entschäumer und Antigefriermittel, dadurch gekennzeichnet, daß sie

| | |
|---|---|
| 20 bis 50 Gew.-% | Linuron, |
| 2 bis 20 Gew.-% | oberflächenaktive Stoffe, |
| 0 bis 2 Gew.-% | Suspensionshilfsmittel, |
| 0 bis 2 Gew.-% | Entschäumer, |
| 0,05 bis 2 Gew.-% | fettlösliche Disazofarbstoffe, |
| 0 bis 4 Gew.-% | Antigefriermittel und als |
| Rest zu 100 Gew.-% | Wasser |

enthalten.

Als fettlösliche Disazofarbstoffe für die erfindungsgemäße kristallisationshemmende Stabilisierung kommen beispielsweise die im »Colour Index, Third Edition, Vol. 4 (1971), Published by the Society of Dyers and Colorists, England« aufgeführten fettlöslichen Disazofarbstoffe in Frage.

Besonders bevorzugte Disazofarbstoffe aus den im Colour-Index aufgeführten Verbindungen sind z. B.

Nr. 26 100  (Fettrot HRR)
Nr. 26 105  (Fettrot BB)
Nr. 26 125  (Fettrot 5B)
Nr. 26 150  (Fettschwarz HB)

wobei die in Klammern hinter der Volour-Index-Nr. angegebenen Bezeichnungen Handelsnamen entsprechender Produkte der Hoechst AG bedeuten.

Auch Gemische von verschiedenen fettlöslichen Disazofarbstoffen können eingesetzt werden.

Der Begriff oberflächenaktive Stoffe umfaßt sowohl Dispergier- als auch Netzmittel. Beispielsweise können folgende oberflächenaktive Stoffe verwendet werden:

Seifen, Natriumalkylbenzolsulfonate, Natriumlaurylsulfate, Natriumbutylnaphthalinsulfonate, Oleoyl-N-methyl-taurid-Natrium, ligninsulfonsaure Alkali- oder Ammoniumsalze, Natriumsalze von mit Formaldehyd kondensierten Naphthalinsulfonsäuren, Natriumsalze von sulfonierten Phenol-Formaldehyd- und von sulfonierten Phenol-Harnstoff-Formaldehyd-Kondensaten, Fettalkoholpolyglykoläther, Fettalkoholpolyglykolätherphosphate, Fettalkoholpolyglykoläthersulfate, polymerisierte Alkylaryl- und Arylalkylsulfonate.

Suspendierhilfsmittel zur Erzielung einer zusätzlichen Viskositätsverminderung in der Dispersion sind vorzugsweise quellfähige Mineralpulver, z. B. Bentonit- oder Montmorillonit-Pulver.

Als Entschäumer kommen alle bekannten schaumdämpfenden Mittel in Frage. Bevorzugt werden Siliconentschäumer, wie z. B. Siloxane eingesetzt.

Als Antigefriermittel kann man z. B. Äthylenglykol, Propylenglykol oder Glycerin einsetzen.

Als aromatische Lösungsmittel werden z. B. Alkylbenzole, vorzugsweise Xylol, aber auch höher siedende technische Aromatendestillate, z. B. auf Mineralölbasis, im Siedebereich von z. B. 156 bis 312°C (bei Normaldruck) eingesetzt. Die Aromatendestillate können auch bis zu ca. 35 Gew.-% gesättigte paraffinische oder alicylische Kohlenwasserstoffe enthalten.

Als Ketone werden vorzugsweise aliphatische oder cycloaliphatische Ketone eingesetzt, insbesondere solche flüssigen Ketone, deren Flammpunkt (geschlossen gemessen) oberhalb von 40°C liegt. Die Ketone dienen zur Verbesserung der Löslichkeit von Linuron in aromatischen Lösungsmitteln sowie zur Verbesserung der Kältestabilität der emulgierbaren Linuronkonzentrate, beispielsweise bis zu Temperaturen von etwa 0° bis −10°C. Besonders geeignete Ketone sind z. B. Isophoron und Cyclohexanon, insbesondere Isophoron.

Besonders bevorzugte Lösungsmittel sind z. B. Kombinationen aus Isophoron und Xylol.

Emulgierbare Konzentrate können z. B. durch Auflösen des Wirkstoffes in organischen Lösungsmitteln oder in Lösungsmittelgemischen, wie z. B. Xylol und Isophoron und Zusatz von Emulgatoren sowie gegebenenfalls weiteren Formulierungshilfsmitteln erhalten werden.

Unter Emulgatoren sind alle bekannten und als Hilfsmittel zur Formulierung von emulgierbaren Konzentraten verwendeten xyllöslichen oberflächenaktiven Stoffe zu verstehen, wie z. B. Calciumsalze von Dodecylbenzolsulfonsäuren oder Calciumsalze von chlorierten $(C_{13}-C_{15})$-Alkansulfonsäuren neben Polyglykoläthern von z. B. Nonylphenolen oder Triisobutylphenolen oder Polyglykoläthern von z. B. Fettalkoholen oder z. B. Umsetzungsprodukten von Rizinusöl mit Äthylenoxid.

Die Herstellung erfindungsgemäßer Suspensionskonzentrate von Linuron kann z. B. in der Weise erfolgen, daß man Linuron-Wirkstoff in der wäßrigen Lösung der oberflächenaktiven Stoffe, in der der fettlösliche Disazofarbstoff und Suspendierhilfsmittel suspendiert sind, verrührt und die gesamte Dispersion zunächst auf einer Zahn- oder Korundscheibenmühle auf eine Feinheit von ca. 200−300 Mikron vorzerkleinert und anschließend mittels 2 mm-Glasperlen in einer Reibkugelmühle, deren Gehäusemantel mit Wasser gekühlt wird, auf eine Endfeinheit von ca. 5 Mikron feinstmahlt.

Die erfindungsgemäßen emulgierbaren Konzentrate von Linuron können z. B. auf einfache Weise dadurch hergestellt werden, daß man in die vorgelegten Lösungsmittel Linuron, die Emulgatoren und den fettlöslichen Disazofarbstoff eindosiert und unter Rühren löst.

Bei der Anwendung der Suspensionskonzentrate bzw. der emulgierbaren Konzentrate werden die je nach Konzentration der Mittel erforderlichen Volumina abgemessen, in Wasser verrührt und in Form verdünnter Suspensionen oder verdünnter Emulsionen bzw. Suspoemulsionen auf dem Felde ausgespritzt.

Die erfindungsgemäß kristallisationshemmend stabilisierten emulgierbaren Konzentrate bzw. die wäßrigen Suspensionskonzentrate von Linuron sind chemisch, physikalisch sowie anwendungstechnisch ausgezeichnet lagerungsstabil, wie Lagerungsteste unter erschwerten Bedingungen, wie z. B. 3 Monate bei 50°C bzw. verschiedene Kälteteste zeigen.

Mit den erfindungsgemäß stabilisierten Konzentraten von Linuron lassen sich, bei vergleichbaren Aufwandmengen, überraschenderweise noch bessere herbizide Wirkungen als mit Linuron-Spritzpulvern erzielen, wenn man vergleichbare Formulierungen in Wasser emulgiert bzw. suspendiert zur Anwendung bringt, was in der Praxis Wirkstoffeinsparungen ermöglicht. Zur Bekämpfung von Unkräutern werden die erfindungsgemäßen herbiziden Konzentrate aus wäßriger Emulsion bzw. Suspension in herbizid wirksamen Mengen auf die Flächen bzw. Substrate aufgebracht.

Die folgenden Beispiele zeigen die Wirkung erfindungsgemäßer, kristallisationshemmender Bestandteile sowie die biologische Wirksamkeit erfindungsgemäß formulierter Linuron-Konzentrate. Für die biologischen Versuche wird als Vergleichspräparat ein handelsübliches Linuron-Spritzpulver mit 50 Gew.-% Wirkstoffgehalt eingesetzt.

## Formulierungsbeispiele

### Vergleichsbeispiel 1

Ein wäßriges Suspensionskonzentrat der Zusammensetzung

| | |
|---|---|
| 40,0 Gew.-% | Linuron |
| 5,0 Gew.-% | ligninsulfonsaures Natrium (Vanisperse CB) |
| 1,0 Gew.-% | polymerisierte Alkylarylsulfonsäure als Na-Salz (Darvan Nr. 3) |
| 0,2 Gew.-% | Montmorillonit-Pulver |
| 0,5 Gew.-% | Silicon-Entschäumer (SE2, Wacker Chemie) und |
| 53,3 Gew.-% | Wasser |

wird in einer Reibkugelmühle auf eine solche Teilchen-Feinheit vermahlen, daß 96 Gew.-% der Teilchen kleiner als 5 Mikron sind, gemessen mit einem Coulter-Counter-Zählgerät. Bei der Vorbereitung der Messung verwendet man zum Verdünnen der zu prüfenden Dispersion zweckmäßigerweise eine gesättigte wäßrige Linuronlösung.

Das so erhaltene Suspensionskonzentrat ist gut fließfähig und leicht gießbar. Bei dessen Lagerung tritt jedoch eine zunehmende Verdickung und Sedimentbildung im Produkt ein, z. B. wenn man die Dispersion 2 bis 3 Monate bei 50° C lagert.

Vergleicht man mittels einer Polaroid-Kamera aufgenommene mikroskopische Aufnahmen von Proben des Suspensionskonzentrates (jeweils 0,5 ml Konzentrat verdünnt mit 99,5 ml Wasser), so stellt man fest, daß, im Gegensatz zu dem frisch hergestellten Konzentrat, in dem gelagerten Produkt nahezu der Hauptanteil des Feinkorns verschwunden und zu groben Linuron-Kristallen in Form von regelmäßigen, für Linuron typischen Keilen umkristallisiert ist, deren Durchmesser bis zu 70 Mikron betragen.

### Vergleichsbeispiel 2
### (entsprechend US-PS 3 060 084, Example 2)

Stellt man nach der Verfahrensweise des Vergleichsbeispiels 1 eine Linuron-Dispersion her mit der Zusammensetzung

| | |
|---|---|
| 42,50 Gew.-% | Linuron |
| 3,00 Gew.-% | oberflächenaktives Mittel (Atlox 8916 P) |
| 0,25 Gew.-% | Suspensionshilfsmittel (Carbopol 934) |
| 0,70 Gew.-% | 10%ige Natronlauge |
| 0,20 Gew.-% | Silicon-Entschäumer (SE2) und |
| 53,35 Gew.-% | Wasser, |

so zeigt sich, daß diese Dispersion sich während einer 2 bis 3monatigen Lagerungszeit bei 50° C zu einer schneidbaren Paste verfestigt.

In dem 2 bis 3 Monate gelagerten Präparat ist ein Kristallwachstum des Linurons zu Partikeln mit Durchmessern bis zu 65 Mikron und auch darüber festzustellen, gegenüber einer Teilchenfeinheit von weniger als 5 Mikron bei 95 Gew.-% der Teilchenmasse in dem frisch gemahlenen Suspensionskonzentrat.

### Vergleichsbeispiel 3

Es wird ein emulgierbares Konzentrat von Linuron der folgenden Zusammensetzung hergestellt:

| | |
|---|---|
| 20,0 Gew.-% | Linuron |
| 30,0 Gew.-% | Isophoron |

| | |
|---|---|
| 37,0 Gew.-% | Aromatendestillat, Siedebereich 198—316°C, enthaltend 70 Gew.-% Aromaten und 30 Gew.-% gesättigte Kohlenwasserstoffe, |
| 4,0 Gew.-% | Rizinusölpolyglykoläther (40AeO) |
| 6,0 Gew.-% | dodecylbenzolsulfonsaures Calcium |
| 3,0 Gew.-% | Triisobutylphenolpolyglykoläther (30AeO)*) |

*) Anzahl AeO = Anzahl Äthylenoxideinheiten im Polyglykolätherrest

Prüft man die Stabilität der wäßrigen Emulsion dieses Präparates, indem man 2,5 ml davon in 97,5 ml Wasser verrührt, so bildet sich zunächst eine milchige, blau opaleszierende Emulsion, die nach wenigen Minuten ihre Opaleszenz verliert unter Abscheidung und Sedimentation von Linuron-Kristallen, die nach 15 Minuten Partikellängen bis zu 150 Mikron, nach 30 Minuten bis zu 250 Mikron aufweisen.

## Beispiel 1

Stellt man nach der Verfahrensweise des Vergleichsbeispiels 1 das dort beschriebene Suspensionskonzentrat unter zusätzlicher Zugabe von 0,5 Gew.-% des Disazofarbstoffs Fettschwarz HB (Colour-Index Nr. 26150) bei sonst gleichen Bedingungen her, so erhält man ein lagerungsstabiles Suspensionskonzentrat, das auch nach einer Lagerungszeit von mehr als 3 Monaten bei 50°C sein Kornverteilungsspektrum beibehält und auch in seiner Viskosität unverändert bleibt. Das Produkt ist nach dem Lagerungstest unverändert leicht gieß- und dosierbar. Es hat folgende Zusammensetzung:

| | |
|---|---|
| 40,0 Gew.-% | Linuron |
| 5,0 Gew.-% | ligninsulfonsaures Natrium (Vanisperse CB) |
| 1,0 Gew.-% | polymerisierte Alkylarylsulfonsäure als Na-Salz (Darvan Nr. 3) |
| 0,2 Gew.-% | Montmorrillonit-Pulver |
| 0,5 Gew.-% | Silicon-Entschäumer (SE2) |
| 0,5 Gew.-% | Fettschwarz HB |
| 52,8 Gew.-% | Wasser |

## Beispiel 2

Ersetzt man in dem Suspensionskonzentrat nach Beispiel 1 das Fettschwarz HB durch eine gleiche Menge des Disazofarbstoffes Fettrot HRR (Colour-Index Nr. 26100), so erhält man eine Dispersion, die nach der erschwerten Lagerung von 3 Monaten bei 50°C ebenso gießfähig ist wie nach der Herstellung und in der ein nur sehr geringes Kristallwachstum auf Teilchengrößen bis zu max. 12 Mikron feststellbar ist.

## Beispiel 3

Setzt man dem emulgierbaren Konzentrat des Vergleichsbeispiels 3 zusätzlich noch 0,1 Gew.-% des Disazofarbstoffs Fettrot BB (Colour-Index Nr. 26105) oder 0,1 Gew.-% Fettrot HRR (Colour-Index Nr. 26100) zu, so kann man bei der in dem Vergleichsbeispiel 3 beschriebenen Stabilitätsprüfung an der in Wasser gebildeten Emulsion feststellen, daß sich hier mit Verzögerung und erst nach etwa 30 Minuten ein Teil des Linuron in feinsten Kristallen von 10—20 Mikron in Form einer Suspoemulsion auszuscheiden beginnt, wobei durch das Kristallwachstum nach 2 Stunden Partikelgrößen von 30 bis 40 Mikron nicht überschritten werden, auch nicht in kaltem Wasser von 10°C, in dem das Kristallwachstum üblicherweise beschleunigt vor sich geht. Die Kornverteilung des in der Suspoemulsion dispergierten Linurons nach mehrstündigem Stehen der Emulsion ist vergleichbar mit der Kornverteilung eines Linuron-Spritzpulvers. Die Suspoemulsion zeigt keine Linuronsedimentation und es kann mit dem Präparat die volle biologische Wirkung wie mit der frisch hergestellten Emulsion erzielt werden.

Biologische Beispiele

Beispiel I

Vergleichende Untersuchung der Herbizidwirkung von Linuron 50% WP (Spritzpulver), Linuron 40% Dispersion und Linuron 20% EC (Emulsionskonzentrat)

Es werden die Kulturpflanzen Weizen (Triticum), Hafer (Avena) und Senf (Sinapis) in Versuchstöpfen auf Lehmboden angezogen und nach dem Auflaufen mit den obengenannten Linuron-Formulierungen in den angegebenen Mengen in wäßrigen Verdünnungen entsprechend einer Brühemenge von 300 l/ha bei 3 bar Druck gespritzt. Die Schadwirkung wird nach 4 Wochen festgestellt und in Prozenten ausgedrückt, bezogen auf die unbehandelte Kontrolle (= 0).

| Produkt | Dosis kg/ha Wirkstoff | Schadwirkung in Prozent bei | | |
|---|---|---|---|---|
| | | Weizen | Hafer | Senf*) |
| Linuron 50% WP (Handelsprodukt) | 0,06 | 0 | 0 | 94 |
| | 0,13 | 10 | 15 | 100 |
| | 0,25 | 46 | 48 | 100 |
| Linuron 40% Disp. (nach Beispiel 1) | 0,06 | 0 | 0 | 95 |
| | 0,13 | 12 | 15 | 100 |
| | 0,25 | 50 | 55 | 100 |
| Linuron 20% EC (nach Beispiel 3) | 0,06 | 0 | 0 | 98 |
| | 0,13 | 16 | 17 | 100 |
| | 0,25 | 54 | 58 | 100 |

*) Senf steht für dikotyle Unkräuter.

Die vergleichende Untersuchung von Linuron 50% WP, Linuron 40% Dispersion und Linuron 20% EC zeigt in der Tendenz eine etwas stärkere Wirkung bei der Dispersion und bei der EC-Formulierung. Sehr vorteilhaft heben sich Dispersion und EC von dem WP bei der Anwendung dadurch ab, daß sie bei der Zubereitung der Spritzbrühe volumetrisch dosiert werden können und nicht abgewogen werden müssen.

**Patentansprüche**

1. Flüssige, herbizide und Linuron als Wirkstoff enthaltende Mittel in Form von emulgierbaren Konzentraten oder in Form von wäßrigen Suspensionskonzentraten, dadurch gekennzeichnet, daß sie als kristallisationshemmende Bestandteile fettlösliche Disazofarbstoffe enthalten, die das Auskristallisieren von Wirkstoff in den wäßrigen Emulsionen der emulgierbaren Konzentrate bzw. in den wäßrigen Suspensionskonzentraten und deren wäßrigen Verdünnungen verhindern.

2. Herbizide Mittel nach Anspruch 1, dadurch gekennzeichnet, daß sie 0,05 bis 2 Gew.-%, vorzugsweise 0,1 bis 0,5 Gew.-% fettlösliche Disazofarbstoffe enthalten.

3. Flüssige, emulgierbare, herbizide Konzentrate nach Ansprüchen 1 und 2, dadurch gekennzeichnet, daß sie

| | |
|---|---|
| 10 bis 25 Gew.-% | Linuron, |
| 25 bis 40 Gew.-% | Ketone, insbesondere Isophoron und/oder Cyclohexanon, |
| 60 bis 18 Gew.-% | aromatische Lösungsmittel, die gegebenenfalls bis zu 35 Gew.-% gesättigte Kohlenwasserstoffe enthalten, |
| 0,05 bis 2 Gew.-% | fettlösliche Disazofarbstoffe und |
| 4,95 bis 15 Gew.-% | Emulgatoren |

enthalten.

4. Flüssige, wäßrige, herbizide Suspensionskonzentrate nach Ansprüchen 1 und 2, dadurch gekennzeichnet, daß sie

| | |
|---|---|
| 20 bis 50 Gew.-% | Linuron, |
| 2 bis 20 Gew.-% | oberflächenaktive Stoffe, |
| 0 bis 2 Gew.-% | Suspensionshilfsmittel, |
| 0 bis 2 Gew.-% | Entschäumer, |
| 0,05 bis 2 Gew.-% | fettlöslicher Disazofarbstoffe, |
| 0 bis 4 Gew.-% | Antigefriermittel und als Rest zu 100 Gew.-% Wasser |

enthalten.

5. Verwendung von herbiziden Mitteln gemäß Ansprüchen 1 bis 4 zur Unkrautbekämpfung.

6. Verfahren zur Bekämpfung von Unkräutern, dadurch gekennzeichnet, daß man auf die von ihnen befallenen Flächen oder Substrate eine herbizid wirksame Menge herbizider Mittel gemäß Ansprüchen 1 bis 4 aus wäßrigen Verdünnungen aufbringt.

## Claims

1. Liguid herbicidal compositions containing Linuron as active substance in the form of emulsifiable concentrates or aqueous suspension concentrates, characterized in that the compositions contain fat-soluble disazo dyes to inhibit the crystallization of the active substance in aqueous emulsions of the emulsifiable concentrates or in aqueous suspension concentrates and the aqueous dilutions thereof.

2. Herbicidal compositions as claimed in claim 1, characterized in that they contain from 0.05 to 2% by weight, preferably from 0.1 to 0.5% by weight of fatsoluble disazo dyes.

3. Liquid, emulsifiable, herbicidal concentrates as claimed in claim 1 or 2, characterized in that they contain

| | |
|---|---|
| 10 to 25% | by weight of Linuron, |
| 25 to 40% | by weight of ketones, preferably isophorone and/or cyclohexanone, |
| 60 to 18% | by weight of aromatic solvents optionally containing up to 35% by weight of saturated hydrocarbons, |
| 0.05 to 2% | by weight of fat-soluble disazo dyes and |
| 4.95 to 15% | by weight of emulsifier. |

4. Liquid, aqueous, hericidal suspension concentrates as claimed in claim 1 or 2, characterized in that they contain

| | |
|---|---|
| 20 to 50% | by weight of Linuron, |
| 2 to 20% | by weight of surface-active substances, |
| 0 to 2% | by weight of suspension auxiliaries, |
| 0 to 2% | by weight of defoamers, |
| 0.05 to 2% | by weight of fat-soluble disazo dyes, |
| 0 to 4% | by weight of antifreezing agents and |

water as balance to 100% by weight.

5. Use of the herbicidal compositions as claimed in claims 1 to 4 for combating weeds.

6. Method for combating weeds which comprises applying to the locus of weed growth or to the substrates a herbicidally effective amount of a composition as claimed in claims 1 to 4 in the form of aqueous dilutions.

## Revendications

1. Produits liquides herbicides contenant du linuron comme matière active, sous la forme de concentrés émulsionnables ou sous la forme de concentréssuspensions aqueux, produits caractérisés en ce qu'ils contiennent, comme constituants inhibiteurs de cristallisation, des colorants disazoïques liposolubles qui empêchent la cristallisation de la matière active dans les émulsions aqueuses des concentrés émulsionnables ou dans les concentrés-suspensions aqueux ainsi que dans leurs produits de dilution par de l'eau.

2. Produits herbicides selon la revendication 1 caractérisés en ce qu'ils contiennent de 0,05 à 2% en poids, de préférence de 0,1 à 0,5% en poids, de colorants disazoïques liposolubles.

3. Concentrés herbicides liquides émulsionnables selon l'une des revendications 1 et 2, caractérisés en ce qu'ils contiennent:

de 10 à 25%          en poids de linuron,
de 25 à 40%          en poids de cétones, plus spécialement d'isophorone et/ou de cyclohexanone,
de 60 à 18%          en poids de solvants aromatiques contenant éventuellement jusqu'à 35% en poids d'hydrocarbures saturés,
de  0,05 à 2%        en poids de colorants disazoïques liposolubles et
de  4,95 à 15%       en poids d'émulsionnants.

4. Concentrés-suspensions herbicides aqueux liquides selon l'une des revendications 1 et 2, caractérisés en ce qu'ils contiennent:

de 20 à 50%          en poids de linuron,
de  2 à 20%          en poids de surfactifs,
de  0 à  2%          en poids d'adjuvants de suspension,
de  0 à  2%          en poids d'anti-mousses,
de  0,05 à  2%       en poids de colorants disazoïques liposolubles,
de  0 à  4%          en poids d'anti-gels et, pour le reste, complément à 100% en poids, de l'eau.

5. Application de produits herbicides selon l'une quelconque des revendications 1 à 4 pour la lutte contre des plantes adventices.

6. Procédé pour combattre des plantes adventices, procédé caractérisé en ce qu'on applique sur les surfaces ou substrats attaqués par de telles plantes, une quantité manifestant une activité herbicide de produits herbicides selon l'une quelconque des revendications 1 à 4 sous la forme de leurs produits de dilution par de l'eau.